# EUROPÄISCHE PATENTANMELDUNG

(11) **EP 2 218 909 A2**
(43) Veröffentlichungstag der Anmeldung: **18.08.2010**
(21) Anmeldenummer: 10001546.0
(22) Anmeldetag: 16.02.2010
(51) Int. Cl.: F03D 1/00, F03D 11/04, F03D 11/00, F03D 11/02, F03D 9/00

(54) **Windkraftanlage**

(30) Priorität: 17.02.2009 DE 102009009327
(71) Anmelder: Schwieger, Hartwig, 29227 Celle (DE); Wichmann, Torsten, 29364 Langlingen (DE); Piper, Erik John William, 31311 Uetze (DE)
(72) Erfinder: Schwieger, Anette, 29227 Celle (DE)
(74) Vertreter: König, Norbert

(57) **Zusammenfassung**

Die Erfindung betrifft eine Windkraftanlage mit einem rohrförmigen Mast, einem einen Maschinenraum aufweisenden Mastunterbau, einem drehbar auf dem Mast gelagerten Mastkopf (Gondel), einem von dem Mastkopf aufgenommenen Rotor mit Nabe und Rotorblättern und mit einem vom Rotor zum Mastunterbau führenden innerhalb des Mastes verlaufenden Antriebsstrang. Der Mastunterbau (6) und der Mast (4) bilden eine selbsttragend ausgebildete, vormontierte und auf einem Fundament (21) aufstellbare Baueinheit.

## Beschreibung

Die Erfindung betrifft eine Windkraftanlage gemäß Oberbegriff des Anspruchs 1.

Die Windkraft als erneuerbare Energieform hat sich zumindest in Deutschland seit einigen Jahren etabliert und liefert heute über entsprechende Windkraft-Großanlagen einen beachtenswerten Anteil an der gesamten Stromgewinnung.

Der Einsatz von entsprechenden Windkraftanlagen kleinerer Baugrößen mit Mastlängen bis ca. 20 m und 1 - 15 m Rotordurchmesser, also mit einer Spitzenhöhe von ca. 20 m, bspw. für die Versorgung einzelner privater Haushalte ist eher selten. Solche Anlagen haben eine Spitzenleistung von unter 100 kW. Ab Spitzenhöhen größer 20 m sind sehr hohe baurechtliche Anforderungen der Großanlagen zu erfüllen. Bisher werden solche Windkraftanlagen im privaten Bereich - wenn überhaupt - als sogenannte Inselanlagen betrieben, d.h., dass sie ausschließlich Strom für eine bestimmte ausgewählte Anwendung erzeugen. So sorgen diese Windkraftanlagen vor allern für eine teilweise völlig autarke Stromversorgung in Ferienhäusern, Wohnmobilen, auf Booten oder in Kleingartenanlagen.

Die Aufgabe der vorliegenden Erfindung besteht darin, eine Windkraftanlage kleinerer Baugröße so auszubilden, dass durch selbsttragende, leichte Bauweise, leichte Aufttellbarkeit, hohe Verfügbarkeit, lange Wartungsintervalle bei vereinfachter Durchführung der Wartung und optimierten Energieertrag die Akzeptanz von Windkraftanlagen, insbesondere kleinerer Baugrößen wesentlich erhöht wird.

Diese Aufgabe wird durch eine Windkraftanlage mit den Merkmalen des Anspruchs 1 gelöst.

Vorteilhafte und zweckmäßige Weiterbildungen der Aufgabenlösung sind in den Unteransprüchen angegeben.

Die Erfindung schlägt vor, einen Mast und einen Mastunterbau der Windkraftanlage als selbsttragende, vormontierte Baueinheit auszubilden, die sozusagen als schlüsselfertige Anlage angeliefert werden kann und dann nur noch auf einem geeigneten Fundament aufgestellt zu werden braucht. Es muss dann nur noch vor dem Aufstellen der Rotor vor Ort montiert werden.

Das Aufstellen der Anlage erfolgt auf einfache Weise vorteilhaft mit einer hydraulischen Kippvorrichtung, wobei vorzugsweise bereits im Mastunterbau vormontierte Verbraucher mit gekippt werden. Die Kippvorrichtung erleichtert die Wartung der Anlage. Eine Trennung des Antriebsstranges ist nicht erforderlich, zumal, wie schon erwähnt, die im Unterbau befindlichen Verbraucher mit der Gesamtanlage kippen.

Im Mastunterbau ist gemäß einer Weiterbildung der Erfindung eine Verbraucherkonsole als Wechselbaugruppe für eine multifunktionale Nutzung der Anlage ausgebildet. Hierzu kann am unteren Getriebe ein doppelter Wellenausgang vorgesehen werden, wodurch die Nutzungsvielfalt deutlich erhöht wird.

Damit ermöglicht die erfindungsgemäße Ausbildung die Windkraftanlage als Baukastensystem für verschiedene Baugrößen, bspw. für die Mastlänge und den Rotordurchmesser, und für verschiedene Abtriebsvarianten und Getriebe sowie für verschiedene Nutzungen durch verschiedene Verbraucher, wie Wärmepumpe, Generatoren, Pumpen, Kompressoren, zur Verfügung zu stellen.

Die Erfindung schafft eine moderne, schnellläufige Windkraftanlage mit hoher Leistungsdichte mit einer Rotordrehzahl von 300-500 Umdrehungen/min, bei relativ kleinen Anlagen mit z.B. einem Rohrdurchmesser von 2,5 m.

Die Erfindung soll nachfolgend anhand der beigefügten Zeichnung näher erläutert werden.

### Es zeigt

Fig. 1 eine Windkraftanlage mit Horizontalrotor und
Fig. 2 eine Windkraftanlage mit Vertikalrotor.

Gleiche und einander entsprechende Bauteile sind in den Figuren der Zeichnung mit den gleichen Bezugszeichen versehen.

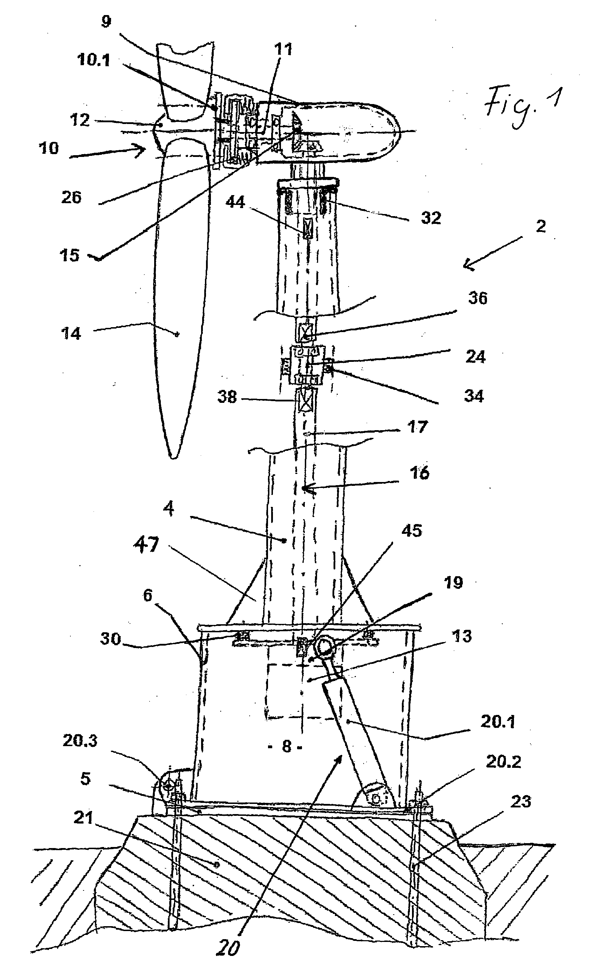

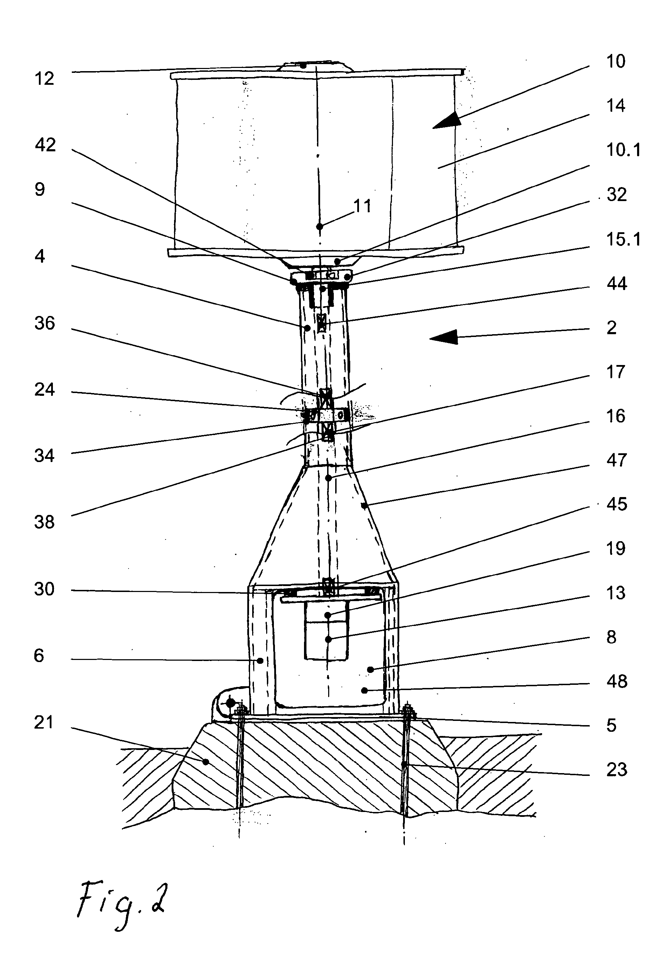

Die Zeichnung zeigt eine Windkraftanlage 2 mit einem rohrförmigen Mast 4, der mit einem eine Grundplatte 5 aufweisenden Mastunterbau 6 ausgestattet ist, der einen Maschinenraum 8 aufweist. Auf dem Mast ist ein Mastkopf 9, auch Gondel genannt, zusammen mit einem Rotor 10 mit horizontaler Rotationsachse 11 (Fig. 1) oder mit vertikaler Rotationsachse 11.1 (Fig. 2) mit Nabe 12 und Rotorblättern 14 drehbar (um 360 °) gelagert. Mit dem Bezugszeichen 10.1 ist ein Rotorflansch bezeichnet. Der Mastunterbau 6 ist vorzugsweise durch ein Mastrohrsegment mit übergroßem Durchmesser gebildet, welches durch ein konisches Rohrelement oder einen Kegeltrichter (nicht dargestellt) an den Mast 6 gebunden ist.
Die Windkraftanlage kann je nach Bedarf mit wenigstens einer Einrichtung zur Regelung und Steuerung der Leistung, des windgeschwindigkeitsabhängigen Anlauf- und Abschaltverhaltens, der Drehzahl, der Rotorblattverstellung (Pitchregelung, Stallregelung), der Windrichtungsnachführung, der Drehzahl von Verbrauchern 13, wie Generatoren ausgestattet werden. Es kann auch eine Sturmregelung vorgesehen sein.

Vom Rotor 10 führt ein Antriebsstrang 16, welcher bei der Horizontalrotoranlage nach Fig. 1 ein antriebsseitiges bzw. rotorseitiges Winkelgetriebe 15, und bei der Vertikalrotoranlage nach Fig. 2 ein antriebseitiges Getriebe 15.1 aufweist sowie ferner eine innerhalb des Mastes 4 verlaufende Antriebswelle 17 und ein abtriebsseitiges Winkelgetriebe 19 umfasst, zu einer Verbraucherkonsole 18 im Maschinenraum 8.

Das abtriebsseitige Winkelgetriebe kann auch entfallen; der Verbaucher kann dann direkt durch die vertikale Antriebswelle 17 oder über ein Getriebe mit senkrechtem Wellenausgang angetrieben werden. Diese Ausführung ist vorteilhaft bei langsam laufenden Generatoren abwendbar.

Der Mastunterbau 6 und der Mast 4 bilden erfindungsgemäß eine selbsttragend ausgebildete, vormontierte Baueinheit, die vor Ort auf ein die notwendige Standsicherheit gewährleistendes Fundament 21 aufgestellt und mit dem Fundament verbunden wird, wobei vorzugsweise auch die jeweils vorgesehenen anzutreibenden Verbraucher bereits im Maschinenraum 8 des Mastunterbaus 6 vorinstalliert sind. Der Mastunterbau 6 ist großflächig über die Grundplatte 5 mit dem Fundament 21 über Anker/Bolzen-Schraubverbindungen 23 verbindbar.

Der Mastunterbau 6 ist zusammen mit dem Mast 4 einstückig ausgebildet, wobei der Mastunterbau und der Mast vorzugsweise miteinander verschweißt sind.

Der Mast 4 kann alternativ auch über ein flanschähnliches Verbindungselement (nicht dargestellt) lösbar mit dem Mastunterbau 6 verbunden sein. Die Verbindung ist dabei vorzugsweise eine Schraubverbindung.

Der Rotor 10 und gegebenenfalls auch die Gondel 9 stellt eine weitere, vorzugsweise vormontierte Baueinheit dar, die vor Ort an der Spitze des Mastes 4 montiert wird.

Zur Aufstellung der erfindungsgemäßen Windkraftanlage ist eine Kippvorrichtung 20 vorgesehen, die vorzugsweise durch ein zusätzliches, separates Hydraulik-System mit Hydraulikzylinder 20.1 gebildet wird. Der Hydraulikzylinder 20.1 wird hierzu schräg verlaufend mit seinem unteren Ende drehbar an einem fundamentseitigen Kippflansch 20.2 und mit seinem oberen Ende drehbar mit dem Mastunterbau 6 verbunden, welcher an der dem Kippflansch 20.2 gegenüber liegenden Seite über ein Kippgelenk 20.3 kippbar mit dem Fundament 21 verbunden ist. Die Kippfunktion wird durch einen einfachen Zugriff auf die Schrauben 23 der Verbindung mit dem Fundament, die zum Kippen der Anlage gelöst werden, unterstützt. Der Vorteil besteht insbesondere darin, dass mit Hilfe dieser Kippvorrichtung nicht nur die Aufstellung, sondern auch das Abkippen sowie die Demontage erleichtert werden. Mit Hilfe der hydraulischen Kippvorrichtung 20 kann die erfindungsgemäße Windkraftanlage 2 sehr leicht in eine für eine Wartung des Mastkopfes 9 geeignete Lage gekippt werden. Eine Trennung des Antriebsstranges 16 ist nicht erforderlich, da auch die Verbraucher 13 an der Verbraucherkonsole 18 im Maschinenraum 8 des Mastunterbaus 6 montiert verbleiben.

Die Verbraucherkonsole 18 ist als Wechselbaugruppe für eine multifunktionale Nutzung durch Aufnahme von Verbrauchern 13 wie Wärmepumpen, Gleich- und Wechselspannungsgeneratoren, Pumpen, Kompressoren etc. ausgeführt. Hierzu kann das abtriebseitige Winkelgetriebe 19 mit doppeltem oder mehrfachem Wellenausgang versehen sein zum Antrieb mehrerer gleicher oder unterschiedlicher, wählbarer Verbraucher 13. So kann bspw. ein Gleichspannungsgenerator (z.B. in Niedervolt 12 - 48 V, primär zur Speicherung in Akkus) und ein ein- oder mehrphasiger Wechselspannungsgenerator (z.B. 230 oder 400 V, primär zur Einspeisung in das Netz) am Wellenausgang des Winkelgetriebes 19 angeflanscht sein. Diese Kombinationslösung liefert z.B. bei geringem Wind die Energie für den Eigenbedarf und die Akkuspeicherung; bei starkem Wind wird die Spitzenleistung unter Nutzung des höheren Wirkungsgrades des Wechselspannungsgenerators in das Netz eingespeist.

Um schädliche Schwingungen und die Übertragung von solchen Schwingungen zu vermeiden, sind der Antriebsstrang 16 und/oder die Verbraucherkonsole 18 und/oder die Gondel 9 und/oder die Getriebe 15, 19 im Mast 4 mittels Schwingungsdämpfern 30, 32 gelagert angeordnet, wodurch eine schwingungstechnische Isolation sämtlicher beweglicher Teile gegenüber der selbsttragend ausgebildeten Einheit Mast/Mastunterbau 4/6 erreicht wird. Hierbei kann es zweckmäßig sein, die Antriebswelle 17 des Antriebsstrangs 16 in mehreren kurzen Einzelwellen auszuführen und mittels Zwischenlagerungen 24 zu lagern, die Schwingungen absorbierende Fixierungen (Schwingungsdämpfer 34) im Mast aufweisen. Mit dieser kurzen Bauform für die Antriebseinzelwellen wird das Erreichen einer schwingungstechnisch kritischen Drehzahl vermieden.

Für die Übertragung der Drehmomente sind vorzugsweise formschlüssige Gummi-Kupplungselemente vorgesehen, insbesondere auch am Antriebsstrang unter dem oberen Winkelgetriebe 15 und auf dem unteren Winkelgetriebe 19, siehe die Bezugsziffern 44 und 45.

Die Antriebswelle besteht vorzugsweise aus großvolumigen, jedoch dünnwandigen Rohrstrukturen, wodurch die Entstehung von Eigenschwingungen vermieden wird. Diese können miteinander verpresst, verklebt oder verschweißt ausgeführt sein und einen Formschluss zu den elastischen Kupplungen 36, 38 ausbilden. Durch diese Bauweise wird erreicht, dass Drehbewegungen mit hoher Drehzahl und Leistungsdichte ohne Eigenschwingungen im Mast 4 nach unten geleitet werden können.

Eine Windkraftanlage ist nur dann optimal zu betreiben, wenn die Rotordrehzahl und die Drehzahl geeigneter Verbraucher, z.B. Generatoren, Kältemittelkompressoren mit regelbarer Kennlinie ( M über n ) auf die Ist- Windgeschwindigkeit abgestimmt werden. Hierzu gibt es Regelkonzepte, bei denen eine Drehzahlregelung in Form einer Pitchregelung oder einer Stallregelung vorgesehen sind. Bei der Pitchregelung wird die Windkraftanlage aerodynamisch abgebremst, indem die Rotoren durch Verstellen ihrer Anstellwinkel an die momentane Windgeschwindigkeit angepasst werden. Bei einem Rotor mit Stallregelung tritt über der Nenngeschwindigkeit ein Strömungsabriss am Rotorblatt auf, der die Drehzahl und damit die Leistung begrenzt. Es ist auch eine so genannte aktive Stallregelung bekannt, bei der der Punkt des Strömungsabrisses am Rotorblatt zusätzlich über eine Veränderung des Rotorblattanstellwinkels gesteuert werden kann.

Bei sehr starkem Wind besteht die Gefahr einer Überschreitung der Nenngeschwindigkeit oder sogar eines Durchdrehens des Rotors 10. Um dies zu vermeiden, ist es an sich bekannt, die Windkraftanlagen abzuschalten, um Schäden durch mechanische Überbelastung zu vermeiden. Pitchgeregelte Anlagen drehen ihre Rotorblätter in Segeistellung und gehen in einen Trudelbetrieb, stallgeregelte Anlagen werden aus dem Wind gedreht und durch eine Bremse festgesetzt. Es ist auch eine sogenannte Sturmregelung bekannt, bei der die Rotorblätter bei Sturm so verstellt werden, dass die Anlage in einem sicheren Betriebszustand verbleibt.

Bei der erfindungsgemäßen Windkraftanlage ist eine mechanische Bremse 26 vorgesehen, die sich theoretisch auf der langsamen oder der schnellen Welle befinden kann. Die mit dem Rotor 10 verbundene Welle, d.h. die Rotorweile 11 dreht langsam, hat jedoch ein größeres Drehmoment. Die andere Welle, d.h. die Antriebswelle 17 zwischen dem antriebsseitigen Winkelgetriebe 15 und dem Verbraucher dreht schneller mit einem niedrigeren Drehmoment. Die Bremse, die auf der langsamen Rotorwelle 11 montiert ist, muss größer dimensioniert sein, da sie ein höheres Drehmoment aushalten muss. Das Getriebe wird beim Bremsen nur wenig belastet. Bei der erfindungsgemäßen kleinen Windkraftanlage 2 ist das Drehmoment der langsamer drehenden Rotorwelle 11 aber noch klein genug, so dass die Bremse auf der langsamen Rotorwelle 11 installiert werden kann. Die Bremse 26 ist vorzugsweise eine innerhalb der Gondel 9 angeordnete fluidisch, vorzugsweise pneumatisch freischaltbare Scheibenbremse oder Trommelbremse mit direkt auf der Rotorwelle installierter Bremsscheibe. Die Betätigung bzw. Freigabe der Bremse erfolgt über ein von einer elektronischen Steuereinrichtung betätigtes Ventil. Zusätzlich ist eine mittels Fliehkraftgewicht auslösbare Aktivierung der Bremse beim Überschreiten der Nenndrehzahl vorgesehen. Bei Ausfall der Steuer/Regeleinrichtung erfolgt eine Notabschaltung der Anlage. Die Anbringung der Bremse erfolgt über eine Mehrloch-Flanschverbindung - ähnlich der Radbefestigung bei einem PKW.

Zur Erfassung der Windrichtung und zur Ausrichtung des Rotors 10 mit der Windrichtung sind geeignete Mittel vorgesehen, bspw. ein Windflügel 40 mit elastischer, mit Schaltern (46) oder Sensoren bestückter Lagerung 42 in der Gondel 9 oder ein mit der Gondel 9 mitfahrender Windrichtungssensor (nicht dargestellt). Hierbei wird nicht die absolute Windrichtung erfasst, sondern nur die Abweichung der momentanen Ausrichtung der Anlage zur Windrichtung. Damit kann ein Drehwinkelsensor zur Erfassung der momentanen Ausrichtung des Rotors entfallen.

Mit Vorteil ist eine Drehmomentmessung und Drehzahlmessung an der Verbraucherkonsole einsetzbar, wobei vorzugsweise das Reaktionsmoment zwischen Verbraucherkonsole 18 und Mast-Unterbau 6 gemessen wird. Mit Nutzung dieser Messwerte kann die erfindungsgemäße Windkraftanlage ohne einen Windgeschwindigkeitsmesser, der teuer und störanfällig ist, geregelt werden.

### Bezugszeichenliste

- 2: Windkraftanlage
- 4: Mast
- 5: Grundplatte
- 6: Mastunterbau
- 8: Maschinenraum
- 9: Mastkopf, Gondel
- 10: Rotor
- 10.1: Rotorflansch
- 11: Rotationsachse
- 12: Nabe
- 13: Verbraucher, Generator
- 14: Rotorblätter
- 15: Winkelgetriebe
- 15.1: Getriebe (nicht unbedingt erforderlich)
- 16: Antriebsstrang
- 17: Antriebswelle
- 19: Getriebe oder Winkelgetriebe
- 20: Kippvorrichtung
- 20.1: Hydraulik- oder Elektrozylinder
- 20.2: Kippflansch
- 20.3: Kippgelenk
- 21: Fundament
- 23: Ankerbolzen
- 24: Zwischenlagerung
- 26: Bremse (nicht unbedingt erforderlich)
- 30: Schwingungsisolator/Dämpfer
- 32: SchwingungsisolatorlDämpfer
- 34: Schwingungsisfllator/Dämpfer
- 36: elastisches, schwingungsisolierendes Kupplungselement
- 38: elastisches, schwingungsisolierendes Kupplungselement
- 42: Lagerung
- 44: elastisches, schwingungsisolierendes Kupplungselement
- 45: elastisches, schwingungsisolierendes Kupplungselement
- 47: Knotenbleche oder konische Rohrelement
- 48: Türöffnung mit Tür

## Patentansprüche

1. Windkraftanlage mit einem rohrförmigen Mast (4), einem schwenkbar auf dem Mast gelagerten Mastkopf (Gondel) (9), einem am Mastkopf drehbar angeordneten Rotor (10) mit Nabe (12) und Rotorblättern (14), einem Energiewandler oder Verbraucher oder Generator (13) und mit einem vergleichsweise zum Mast voluminösen Mastunterbau (6), **dadurch gekennzeichnet, dass** der Mastunterbau (6) und der Mast (4) eine selbsttragende Baueinheit bilden, die zur Aufnahme von Antriebskomponenten, Energiewandler, Getriebe, Verbraucher, Steuerungskomponenten und anderen wesentlichen Bauteilen ausgebildet ist und mittels einer großflächigen flanschähnlichen Grundplatte (5) mit Schraubverbindungen (23) auf einem Fundament (21) anbringbar ist.

2. Windkraftanlage nach Anspruch 1, **dadurch gekennzeichnet, dass** der Mastunterbau (6) und der Mast (4) als einteilige, in sich steife Stahl-Schweißkonstruktion ausgebildet ist.

3. Windkraftanlage nach Anspruch 1 oder 2, **dadurch gekennzeichnet, dass** die Stahlkonstruktion des Mastunterbaus (6) vorzugsweise mit runden, quadratischen, rechteckigen oder vieleckigen, dünnen Blechstrukturen ausgeführt ist, die vorzugsweise zentrisch zum Mast (4) angeordnet sind, derart, dass eine zentrische Anordnung von Komponenten im Unterbau realisierbar ist, wobei die Verbindung zwischen Mast (4) und Unterbau (6) durch großflächige, steife Knotenbleche (47) oder konische Rohrelemente hergestellt ist.

4. Windkraftanlage nach einem der vorhergehenden Ansprüche, **dadurch gekennzeichnet, dass** die Gondel (9) und/oder die Getriebe (15, 19) und/oder die Energiewandler und/oder Verbraucher (13) und/oder weitere Baugruppen und Komponenten der mechanischen Leistungsübertragung und Leistungsumwandlung mittels Schwingungsdämpfern oder gummielastischen Lagerungen, in oder an der Mast-Unterbau Baugruppe aufgehängt oder befestigt sind.

5. Windkraftanlage nach einem der vorhergehenden Ansprüche, **dadurch gekennzeichnet, dass** innerhalb des Mastes (4) ein zum Mastunterbau führender, weitgehend vertikal verlaufender Antriebsstrang (16), bestehend aus großvolumigen, dünnwandigen Rohrstrukturen aus Leichtmetall oder Kunststoff, vorgesehen ist, der vom Rotor (10) oder der Rotorwelle (11) oder über ein antriebsseitiges Winkelgetriebe (15) oder Getriebe (15.1) vom Rotor (10) oder der Rotorwelle (11) in eine Drehbewegung versetzbar ist.

6. Windkraftanlage nach einem der vorhergehenden Ansprüche, **dadurch gekennzeichnet, dass** der Antriebsstrang (16) in einzelne, mit schwingungsdämpfenden Kupplungselementen (36, 38,44, 45) ausgerüstete Antriebswellen (17) unterteilt ist, die im Mast (4) in schwingungsdämpfenden Zwischenlagerungen (24) gelagert sind.

7. Windkraftlange nach einem der vorhergehenden Ansprüche **dadurch gekennzeichnet, dass** im Maschinenraum (8) des Mastunterbaus (6) wenigstens ein über den Rotor (10) und den Antriebsstrang (16) antreibbarer Verbraucher (13) oder Energiewandler vorgesehen ist, der unmittelbar durch den Antriebsstrang (16) oder über ein abtriebsseitiges Getriebe, Riemengetriebe oder Winkelgetriebe (19) in eine Drehbewegung versetzt wird.

8. Windkraftanlage nach einem der vorhergehenden Ansprüche **dadurch gekennzeichnet, dass** der Energiewandler und/oder der Verbraucher und/oder der Generator (13) und/oder das abtriebsseitige Getriebe (19) mit weiteren Wellenausgängen versehen ist zum Antrieb weiterer oder mehrerer Verbraucher und/oder Wärmepumpen und/oder Generatoren und /oder Pumpen und/oder Kompressoren.

9. Windkraftanlage nach einem der vorhergehenden Ansprüche **dadurch gekennzeichnet, dass** eine ortsfeste oder abnehmbare Kippvorrichtung (20) zum Aufrichten der Windkraftanlage, ggf. mit oder ohne montiertem Rotor vorgesehen ist, die hydraulisch oder mittels Elektrozylindern betätigbar ist und bei Bedarf durch ein separates, mobiles Hydrauliksystem oder Elektrosystem versorgt wird.

10. Windkraftanlage nach einem der vorhergehenden Ansprüche **dadurch gekennzeichnet, dass** die Kippvorrichtung mindestens einen Hydraulikzylinder oder Elektrozylinder (20.1) umfasst, der schräg oder nicht schräg verlaufend mit seinem unteren Ende drehbar an einem fundamentseitig befestigten Kippflansch (20.2) und mit seinem oberen Ende in dafür vorgesehene Aufnahmen am Mastunterbau (6) angeordnet ist, welcher über ein Kippgelenk (20.3) kippbar mit dem Fundament (21) oder dem Kippflansch (20.2) verbunden ist, wobei zum Kippen der Anlage die Schraubverbindungen (23) gelöst werden.

11. Windkraftanlage nach einem der vorhergehenden Ansprüche **dadurch gekennzeichnet, dass** die meisten der Komponenten und Baugruppen der Anlage, das Antriebssystem, die Energiewandler, die Getriebe, die Steuerungskomponenten, etc. fertig vormontiert an der selbsttragenden Mast-Unterbau-Konstruktion angebracht sind und dass die Anlage vorzugsweise lediglich durch Demontage der Rotorblätter und/oder des Mastkopfes (Gondel) in einen einfach transportierbaren Zustand überführbar ist.

12. Windkraftanlage nach einem der vorhergehenden Ansprüche **dadurch gekennzeichnet, dass** der Mast (4) über eine schraub- oder steckbare Verbindung oder eine Flansch- oder Konusverbindung lösbar mit dem Mastunterbau (6) verbunden ist.

13. Windkraftanlage nach einem der vorhergehenden Ansprüche **dadurch gekennzeichnet, dass** im Mast-Unterbau (6) und/oder einer abgedichteten großflächigen, für den Einbau großer Komponenten (Generator, Steuerungseinrichtung, etc.) vorgesehenen Tür, die mit einer versteiften Türöffnung (48) versehen ist, des Mast-Unterbaus und/oder an der Spitze des Mastes (4) temperaturabhängig verschließbare Lüftungsöffnungen zur Erzielung eines Kühl- oder Kamineffektes ausgebildet sind.

14. Windkraftanlage nach einem der vorhergehenden Ansprüche **dadurch gekennzeichnet, dass** der Mastunterbau (6) durch ein Mastrohrsegment mit übergroßem Durchmesser gebildet ist, welches durch ein konisches Rohrelement oder einen Kegeltrichter (nicht dargestellt) an den Mast (4) angebunden ist.

15. Windkraftanlage nach einem der vorhergehenden Ansprüche **dadurch gekennzeichnet, dass** der Rotor (10) um eine näherungsweise horizontal angeordnete Rotationsachse (11) oder um eine näherungsweise vertikal angeordnete Rotationsachse (11.1) drehbar angeordnet ist.
